# EUROPEAN PATENT APPLICATION

(11) **EP 4 410 605 A1**
(43) Date of publication of application: **07.08.2024**
(21) Application number: 24155165.4
(22) Date of filing: 01.02.2024
(51) Int. Cl.: B60R 21/06

(54) **FOLDABLE BARRIER NET**

(30) Priority: 01.02.2023 SE 2350095
(71) Applicant: Klippan Safety AB, 264 21 Klippan (SE)
(72) Inventor: YLIKANGAS, Roger, 263 54 LERBERGET (SE)
(74) Representative: Ström & Gulliksson AB

(57) **Abstract**

A foldable barrier net (100) for separating a cargo area of a vehicle (10) from a passenger compartment of the vehicle (10) is presented. The barrier net (100) comprises at least two upper fastening means connected by an upper net member (101) of the barrier net (100) and being configured to attach the barrier net (100) to a respective upper fastening part (20) of the vehicle (10). At least one of the at least two upper fastening means is an upper fastening arrangement (111) connecting the upper net member (101) and a side net member (103L, 103R) of the barrier net (100). The upper fastening arrangement (111) comprises:
- an upper fastening element (112) for fastening the barrier net (100) to the respective upper fastening part (20) of the vehicle (10),
- an elongated stiff element (113) arranged to extend between the upper net member (101) and the side net member (103L, 103R), and
- a cord member (114) extending from the elongated stiff element (113) through the upper fastening element (112) in a first direction (D1), and from the upper fastening element (112) towards the side net member (103L, 103R) or the upper net member (101) in a second direction (D2).

## Description

### TECHNICAL FIELD

The present disclosure relates to barrier nets and more precisely to barrier nets for separating a cargo area of a vehicle from a passenger compartment of the vehicle.

### BACKGROUND

When transporting goods in a vehicle, there is a risk that the goods will move about the interior of the vehicle as the vehicle accelerates, turns and/or de-accelerates. This may be particular problematic in e.g. stations wagons where a cargo area of the vehicle is open with regards to a passenger compartment of the vehicle. Should the cargo start moving in the forward direction of the vehicle when the vehicle de-accelerates, i.e. brakes, the cargo may hit one of the passengers of the vehicle, damage the interior or windshield of the vehicle.

Typically, the passenger compartment may be protected from the cargo area by a barrier net. The most common use of a barrier net is to arrange it between the back of the rear passenger seat and the cargo area. However, a forward configuration is also commonplace wherein the barrier net is placed directly behind the front seats of the vehicle. This may be the preferred configuration when, for instance, the backrests of the back seats are lowered to increase a volume of the cargo area. In fact, the use of barrier net is so common that some countries have legislations making it illegal to sell cars under certain circumstances without a barrier net. These barrier nets must be cost effective and durable in order to meet legal requirements and protect passengers and the driver from moving cargo.

Today, most barrier nets are substantially rectangular barrier nets configured to be mounted vertically in a vehicle. Each barrier net has fastening means provided in the corners of the barrier net for attaching the barrier net to mating fastening means provided in the vehicle.

A drawback with existing barrier nets is that, even though there are means available to adjust the barrier net to the inner configuration of the vehicle, it has proven difficult to provide a barrier net that fully configures to the inner ceiling of the vehicle. There are numerous vehicle designs with different inner ceilings available. Some vehicles have a rounded inner vehicle ceiling while other have a more elongated configuration with substantially rectangular corners.

From the above it is clear that difficulties arise when it comes to providing a barrier net that conforms to any type of inner ceiling without leaving a gap between the vehicle's inner ceiling and the barrier net. Such a gap can be dangerous should, for instance, cargo from the cargo area during a vehicle deceleration move in a forward direction of the vehicle and damage the interior or windshield of the vehicle. It should also be added that it is possible to provide fastenings means in the middle upper region of the vehicle to prevent a gap formation between the inner ceiling and the barrier net. This is however not a satisfactory solution for most vehicle owners since it is unaesthetic and damages the inner ceiling of the vehicle.

From the above it is understood that there is room for improvement.

### SUMMARY

An object of the present disclosure is to provide a new type of barrier net which is improved over the prior art and which eliminates or at least mitigates the drawbacks related to prior art and/or the drawbacks discussed above. This object is addressed by means of the technique set forth in the appended independent claims; preferred embodiments being defined in the related dependent claims.

More specifically, an object of the invention is to provide a barrier net, for separating a cargo area of a vehicle from a passenger area of the vehicle, that is foldable, easy to mount and that easily conforms to the inner structure of the vehicle, i.e. the ceiling, inner walls and floor of the vehicle. Thus, preventing displacement of objects between the cargo area and the passenger area of the vehicle.

In an aspect, a foldable barrier net for separating a cargo area of a vehicle from a passenger compartment of the vehicle is presented. The barrier net comprises at least two upper fastening means connected by an upper net member of the barrier net and being configured to attach the barrier net to a respective upper fastening part of the vehicle. At least one, of the at least two upper fastening means provided, is an upper fastening arrangement connecting the upper net member and a side net member of the barrier net. The upper fastening arrangement comprises:
- an upper fastening element for fastening the barrier net to the respective upper fastening part of the vehicle,
- an elongated stiff element arranged to extend between the upper net member and the side net member, and
- a cord member extending from the elongated stiff element through the upper fastening element in a first direction D1, and from the upper fastening element towards the side net member or the upper net member in a second direction D2.

An advantage of the providing the upper net member is that it easily conforms to the inner ceiling of the vehicle. An advantage of the elongated stiff element is that it provides rigidity to the barrier net, especially in the top corners of the barrier net, which tend to collapse. Thus, due to the combination of the elongated stiff element with the upper net member, a steady barrier net that follows the inner ceiling of the vehicle is provided. Thereby, no gap, or only a comparably thin gap, is formed between the inner ceiling of the vehicle and the barrier net. The present disclosure makes it possible to provide the upper fastening arrangement as close to the ceiling of the vehicle as possible, or at least closer to the ceiling than upper fastening arrangements known in the art. The above aspect enables edges of the barrier net may be arranged further horizontally respectively vertically (when mounted in a vehicle) than the associated fastening parts of the vehicle.

In an embodiment, the elongated stiff element is attached to and extend along a corner net member of the foldable barrier net, wherein the corner net member is arranged to connect proximal ends of between the upper net member and the side net member at an angle. This is beneficial as the elongated stiff element will be guided by the corner net member.

In an embodiment, the cord member comprises one or more tensioning means for tensioning the cord member when the barrier net is mounted in the vehicle. Thereby, the elongated stiff element can be pulled towards the upper fastening element. This is beneficial as the barrier net may be adjustably mounted and secured to the vehicle.

In an embodiment, the barrier net comprises at least one lower fastening arrangement for fastening the barrier net at a lower region of the vehicle.

In an embodiment, the barrier net comprises two lower fastening arrangements.

Lower fastening arrangements is/are beneficial since it allows the barrier net be secured at a lower region of the vehicle and thereby increasing an ability of barrier net to prevent objects from passing between the cargo area and the passenger area of the vehicle.

In an embodiment, the cord member extends from the elongated stiff element to the lower fastening arrangement. This is beneficial since it allows to adjust upper and lower fastening arrangements simultaneously.

In an embodiment, the cord member is attached to the elongated stiff element at a middle of the elongated stiff element or at a part of the elongated stiff element between the middle of the elongated stiff element and the upper net member. This is beneficial as it allows the barrier net to conform easily to the inner configuration of the vehicle.

In an embodiment, the elongated stiff element extends angularly from the upper net member at an angle α. This is beneficial as it allows the elongated stiff element and the upper net member to conform to the shape of the inner ceiling of the vehicle.

In an embodiment, the angle α is between 25 and 65 degrees.

In an embodiment, the angle α is between 35 and 55 degrees.

In an embodiment, the angle α being about 45 degrees.

The angle α is beneficial as it allows the elongated stiff element and the upper net member to conform to the shape of the inner ceiling of the vehicle.

In an embodiment, the second direction D2 of the cord member extends along the side net member.

In an embodiment, the cord member, in the second direction D2, is guided along the side net member or the upper net member by at least one guiding element. The guiding elements keeps the cord member arranged along the net member. Thereby providing a user-friendly and safe arrangement.

In an embodiment, a resilient element, is attached to, and extends between the elongated stiff element and the upper fastening element.

In an embodiment, a portion of the cord member, extending from the elongated stiff element to the upper fastening element, is longer than the resilient element. Thereby limiting the resilience of the resilient element. When the barrier net comprising the resilient element mounted in a vehicle, the resilient element may be stretched to allow a tight fit without having to loosen e.g. tensioning means. If subjected to a force (e.g. cargo hitting the net member during a collision), the resilient element will be stretched until a point where the cord member will prevent it from extending further. At this point, the cord member, being the load-bearing portion, will carry the force from the cargo.

In an embodiment, the upper net member of the barrier net is made of a flexible material.

In an embodiment, the flexible material is polyethylene (PE).

In an embodiment, the flexible material is polypropylene (PP).

Forming the upper net member from a flexible material is beneficial since the flexible material easily conforms to the inner ceiling of the vehicle.

In an embodiment, barrier net comprises two upper fastening arrangements described above. This is beneficial since it allows the barrier net be secured at two distinct upper regions of the vehicle.

### BRIEF DESCRIPTION OF THE DRAWINGS

These and other aspects, features and advantages will be apparent and elucidated from the following description of various embodiments; references being made to the appended diagrammatical drawings which illustrate non-limiting examples of how the concept can be reduced into practice.
Fig. 1 is a view of a prior art barrier net mounted in a vehicle;
Figs. 2a-c are views of a barrier net according to some embodiments of the present disclosure when mounted in a vehicle;
Fig. 3 is an isolated view of the barrier net according to some embodiments of the present disclosure;
Fig. 4 is a detailed view of part of an upper fastening arrangement of the barrier net according to some embodiments of the present disclosure;
Fig. 5 is a detailed view of part of the upper fastening arrangement of the barrier net according to some embodiments of the present disclosure; and
Fig. 6 is a schematic view of a connection arrangement of the upper fastening arrangement of the barrier net according to embodiments of the invention.

### DETAILED DESCRIPTION OF EMBODIMENTS

Hereinafter, certain embodiments will be described more fully with reference to the accompanying drawings. The invention described throughout this disclosure may, however, be embodied in many different forms and should not be construed as limited to the embodiments set forth herein; rather, these embodiments are provided by way of example so that this disclosure will be thorough and complete, and will fully convey the scope of the invention, such as it is defined in the appended independent claim with preferred embodiment in the depended claims, to those skilled in the art.

The term "coupled" is defined as connected, although not necessarily directly, and not necessarily mechanically. Two or more items that are "coupled" may be integral with each other. The terms "a" and "an" are defined as one or more unless this disclosure explicitly requires otherwise. The terms "substantially," "approximately," and "about" are defined as largely, but not necessarily wholly what is specified, as understood by a person of ordinary skill in the art. The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a method that "comprises", "has", "includes" or "contains" one or more steps possesses those one or more steps, but is not limited to possessing only those one or more steps.

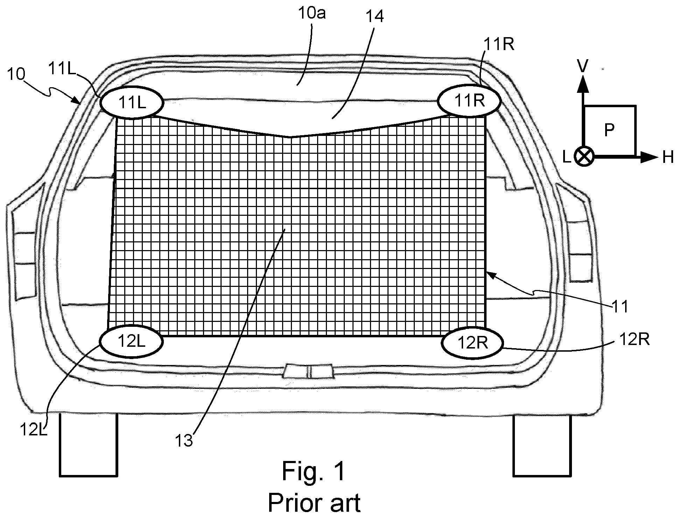

With reference to Fig. 1, a prior art barrier net 11 will be presented. The prior art barrier net 11 is adapted to separate a cargo area of a vehicle 10 from a passenger compartment of the vehicle 10. The prior art barrier net 11 is configured to be mounted vertically in the vehicle 10. The prior art barrier net 11 is substantially rectangular. As seen in Fig. 1, the prior art barrier net 11 is shown from the cargo area of the vehicle 10 looking along a longitudinal axis L of the vehicle 10. The prior art barrier net 11 is, when mounted in the vehicle 10, substantially planar along a plane P of the prior art barrier net 11. The plane P is described by a horizontal axis H and a vertical axis V of the vehicle 10. These axis H, V are the same for the prior art barrier net 11 when the prior art barrier net 11 is mounted in the vehicle 10.

The prior art barrier net 11 generally comprises a meshed netting 13. The barrier net 11 has fastening means 11L, 11R, 12L, 12R arranged at each of its corners for mounting the barrier net 11 to the vehicle 10. The prior art barrier net 11 further comprises an upper left fastening means 11L and upper right fastening means 11R for fastening the prior art barrier net 11 at a (vertically) upper region of the vehicle 10. The prior art barrier net 11 further comprises corresponding lower left fastening means 12L and lower right fastening means 12R for fastening the prior art barrier net 11 at a (vertically) lower region of the vehicle 10. The fastening means 11L, 11R, 12L, 12R of the barrier net 11 are attached to corresponding (mating) fastening means provided in the vehicle 10.

A common drawback with the prior art barrier net 11 is that the barrier net 11 does not conform to an inner ceiling 10a of the vehicle 10. Thereby, a gap 14 is formed between the vehicle's 10 inner ceiling 10a and an upper edge of the prior art barrier net 11. This gap 14 is undesirable and may even be dangerous should e.g. cargo from the cargo area of the vehicle 10, for instance during a vehicle deceleration, move in a forward direction of the vehicle 10 through the gap 14 and damage the interior or windshield of the vehicle 10. Further to this, the gap 14 is visually displeasing and provides a distraction when viewed from a rear view mirror of the vehicle 10 obscuring and limiting the rearwards view from a driver's seat of the vehicle 10.

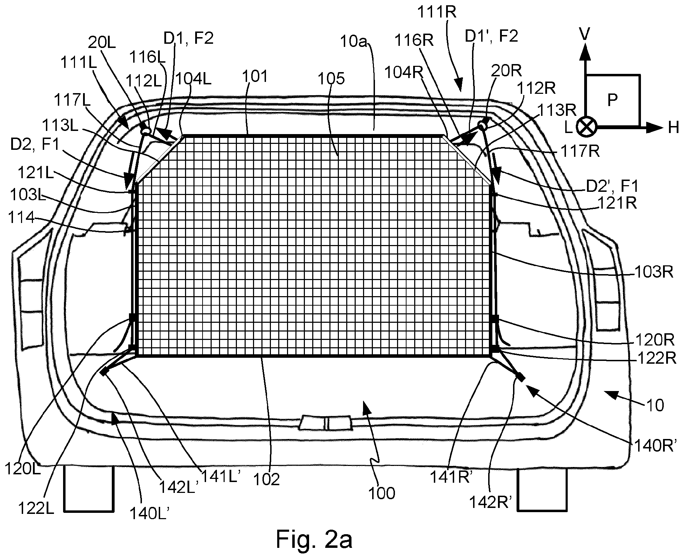

In the following, a foldable barrier net 100, see e.g. Fig. 2a, according to the present disclosure will be presented. The foldable barrier net 100 according to the present disclosure is configured to be mounted in a vehicle without forming a gap 14 as presented with reference to the prior art barrier net 11, or at least reduce a size of the above described gap 14 compared to the prior art barrier net 11.

Fig. 2a-c illustrate the barrier net 100 mounted in a vehicle 10 for separating the cargo area of the vehicle 10 from the passenger compartment of the vehicle 10. The barrier net 100 may also be used to separate for instance the driver compartment from the passenger compartment of the vehicle 10. The barrier net 100 is configured to be mounted vertically in the vehicle 10, extending from an (vertically) upper region of the vehicle 10 to a (vertically) lower region of the vehicle 10. Further to this, when mounted in the vehicle 10, the barrier net 100 extends from a (horizontally) left region of the vehicle 10 to a (horizontally) right region of the vehicle 10. As seen in Fig. 2a-c, the barrier net 100 is shown from the cargo area of the vehicle 10 looking along the longitudinal axis L of the vehicle 10. The barrier net 100 is preferably mounted perpendicularly to the longitudinal extension of the vehicle 10, i.e. along the horizontal axis H in the plane P, but in some embodiments, the barrier net may be mounted at an angle to the plane P.

A first side of the barrier net 100 is shown in Figs. 2a-2c, namely the side of the barrier net facing the cargo area of the vehicle 10 when the barrier net 100 is mounted in the vehicle 10. A second side of the barrier net 100 faces the passenger compartment of the vehicle 10 when the barrier net 100 is mounted in the vehicle 10. The barrier net 100 is, when mounted in the vehicle 10, substantially planar along a plane P of the barrier net 100 described by a horizontal axis H and a vertical axis V of the vehicle 10, which are the same for the barrier net 100 when the barrier net 100 is mounted in the vehicle 10. The barrier net 100 is preferably configured to be mounted substantially perpendicular to a longitudinal axis L of the vehicle 10. However, as indicated above, the teachings of the present disclosure are equally applicable to barrier nets 100 configured to be mounted at an angle to the longitudinal axis L of the vehicle 10.

The barrier net 100 comprises a mesh 105, which may also be described as a net or netting, for separating a first area of the vehicle 10 from a second area of the vehicle 10, such as the cargo area of the vehicle 10 from the passenger compartment of the vehicle 10.

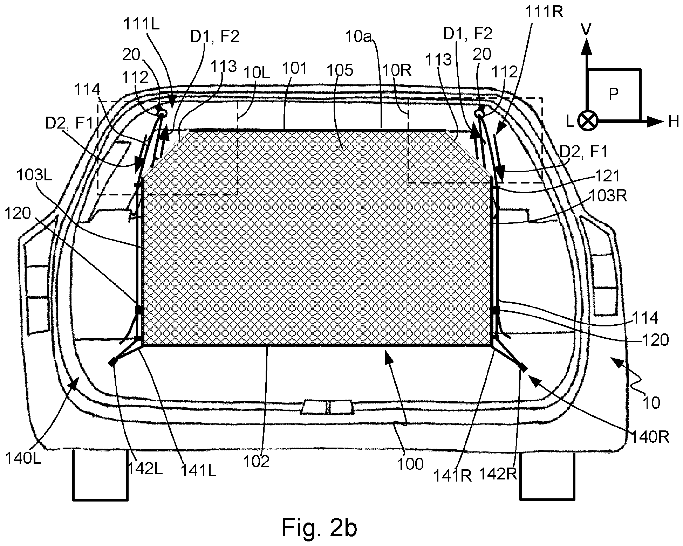

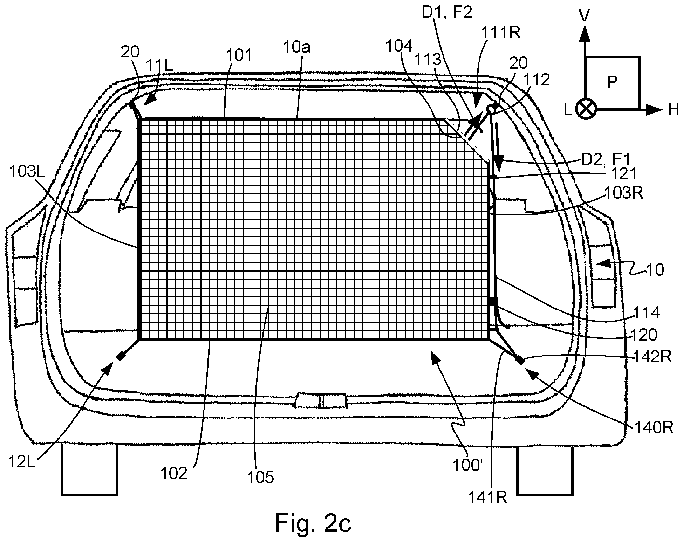

According to an example seen in Figs. 2a and 2c, the mesh 105 may have a plurality of vertical cords and horizontal cords intersecting to form the mesh 105. According to another example, seen in Fig. 2b, the mesh 105 may comprise a plurality of cords that are angled in relationship to the horizontal axis H and the vertical axis V of the vehicle 10. One may describe this as a first group of cords being angled towards an upper left region 10L of the vehicle 10 and a second group of cords being angled towards an upper right region 10R of the vehicle 10 when the barrier net 100 is mounted to the vehicle 10 as is shown in Fig. 2b.

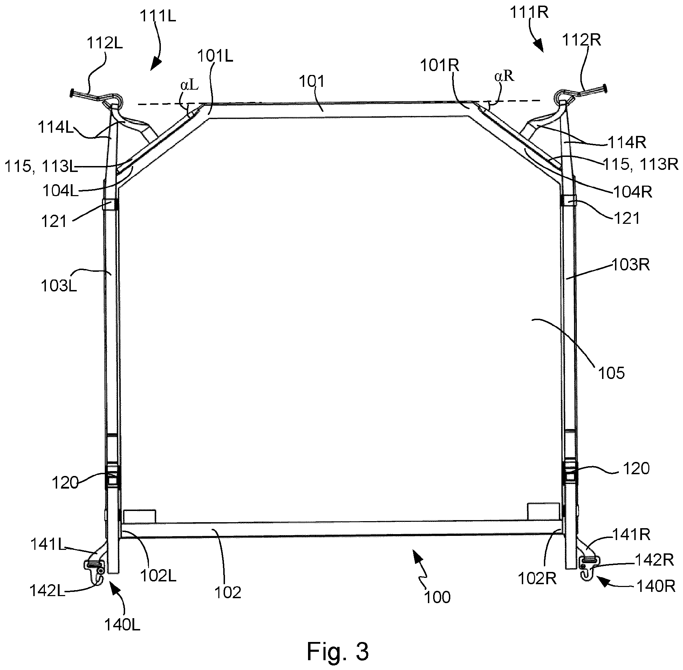

For reasons of clarity and to not overcrowd the figures of the present application, the regions of the vehicle 10 that may be considered as the upper left region 10L and the upper right region 10R of the vehicle 10 are only illustrated in Fig. 2b. The regions indicated in the drawings should in no way be considered as limiting for the invention and are intended to provide an indication of the regions that may be considered as an upper left region and an upper right region. The vehicle 10 is the same vehicle 10 in all figures of the present application. That is to say, in Fig. 1, the prior art barrier net 11 is shown mounted to the vehicle 10 as described above and in Fig. 2a-c, 3, the barrier net 100 according to the present invention is illustrated.

With reference to Fig 2a-2b, the barrier net 100 is shown to have two upper fastening means (upper fasteners), a left upper fastening arrangement 111L and a right upper fastening arrangement 111R according to the present invention, adapted to engage with a respective upper fastening part 20 L, 20R of the vehicle 10 for fastening the barrier net 100 at the (vertically) upper region of the vehicle 10. For reasons of clarity and efficiency of disclosure, technical features in common for left and right upper fastening arrangements 111L, 111R will be described with reference to "the upper fastening arrangement 111" whereas technical features that specifically apply to the left upper fastening arrangement will be described with reference to "the left upper fastening arrangement 111L" and technical features that specifically apply to the right upper fastening means will be described with reference to "the right upper fastening arrangement 111R". Thus, when referring to the "upper fastening arrangement 111" the person skilled in the art understands that this applies to both right upper fastening arrangement 111R and the left upper fastening arrangement 111R.

In Fig. 2c, two upper fastening means are provided, a left upper fastening means, being fastening means 11 known in the art, and a right upper fastening arrangement 111 according to the present invention. The prior art upper fastening means 11 is configured to engage with a matching upper fastening part 20 of the vehicle 10 and will not be discussed further. The upper fastening arrangement 111 is also configured to engage with a matching upper fastening part 20 as previously mentioned and will be disclosed in detail.

Fig. 3 provides a detailed view of the barrier net 100 of Fig. 2a-b. The barrier net 100 has an upper net member 101. The upper net member 101 has a left end 101L and a right end 101R. The upper net member 101 is configured to conform to the inner ceiling 10a of the vehicle 10 when the barrier net 100 is mounted to the vehicle 10. The upper net member 101 is made of a flexible material, preferably polyethylene (PE) or polypropylene (PP). The upper net member 101 is preferably arranged between the left upper fastening arrangement 111L and the right upper fastening arrangement 111R.

The barrier net 100 has a left corner net member 104L and a right corner net member 104R. The left corner net member 104L extends from a left end 101L of the upper net member 101 at an angle αL from upper net member 101. The angle αL is between 25 and 65 degrees, preferably the angle αL is between 35 and 55 degrees and most preferably the angle αL is about 45 degrees. The right corner net member 104R extends from a right end 101L of the upper net member 101 at an angle αR from upper net member 101. The angle αR is between 25 and 65 degrees, preferably the angle αR is between 35 and 55 degrees and most preferably the angle αR is about 45 degrees. In the preferred embodiment, shown in Fig. 3, the angle αL is substantially equal to αR.

In this embodiment, the barrier net 100 comprises a lower net member 102. The lower net member 102 has a left end 102L and a right end 102R. The lower net member 102 is preferably substantially parallel to the upper net 101.

The barrier net 100 of the embodiment in Fig. 3 further comprises a left side net member 103L and a right side net member 103R. The left side net member 103L and the right side net member 103R are arranged to be substantially parallel to each other. The left side net member 103L extends between the left end 102L of the lower net member 102 and a (when mounted in a vehicle) lower end of the left corner net member 104L. The right side net member 103R extends between a right end 102R of the lower net member 102 and a (when mounted in a vehicle) lower end of the right corner net member 104R. An upper end of the left corner net member 104L is attached to the left end 101L of the upper net member 101 and an upper end of the right corner net member 104R is attached to the right end 101R of the upper net member 101.

The barrier net 100, in embodiments comprising the upper net member 101, the left corner net member 104L, the right corner net member 104R, left side net member 103L, the right side net member 103R and the lower net member 102 may be shaped as an irregular hexagon. Other shapes for the barrier net 100 are also possible. For instance, with reference to Fig. 2c, a barrier net 100' according to an embodiment of the present invention with a different barrier net shape is disclosed.

In Fig.3, the upper net member 101, the lower net member 102, the corner net members 104 and the side net members 103 are shown as being substantially linear. However, in some embodiments, the net members 101, 102 may be provided as nonlinear net members. The net members 101, 102 may have a shape configured to fit the inner contours of a particular vehicle. Additional side net members may also be provided to the barrier net 100 if deemed fit. The aim being to provide a barrier net 100 that easily conforms to the inner walls, ceiling and floor of the vehicle 10.

The net members 101, 102, 103L, 103, 104L, 104R may be provided as a frame extending around the mesh 105. In Fig. 3, the upper net member 101, the left corner net member 104L, the right corner net member 104R, left side net member 103L, the right side net member 103R and the lower net member 102 are provided as a frame extending around the mesh 105. For example, the frame may be provided a by belt-like material such as flat strip webbing. In a preferred embodiment, the webbing of the upper net member 101 is a flexible webbing, whereas the webbing of the left corner net member 104L, the right corner net member 104R, left side net member 103L, the right side net member 103R and the lower net member 102 are provided by a comparably rigid woven material, made of, for instance, polyester or nylon fibers. It is equally possible that the upper net member 101, the left corner net member 104L, the right corner net member 104R, the left side net member 103L, the right side net member 103R and the lower net member 102 are provided as edges of the mesh 105.

The left upper fastening arrangement 111L and the right upper fastening arrangement 111R are seen in Fig. 3. The left upper fastening arrangement 111L of the barrier net 100 comprises a left upper fastening element 112L, a left elongated stiff element 113L and a left cord member 114L. The right upper fastening arrangement 111R of the barrier net 100 comprises a right upper fastening element 112R, a right elongated stiff element 113R and a right cord member 114R. The left and right upper fastening elements 112L, 112R are configured to matingly fasten the barrier net 100 to the respective upper fastening part 20 of the vehicle 10. The left and right cord members 114L, 114R each extend between their associated upper fastening element 112L, 112R to the barrier net 100 and to their associated elongated stiff element 113L, 113R arranged to the barrier net 100.

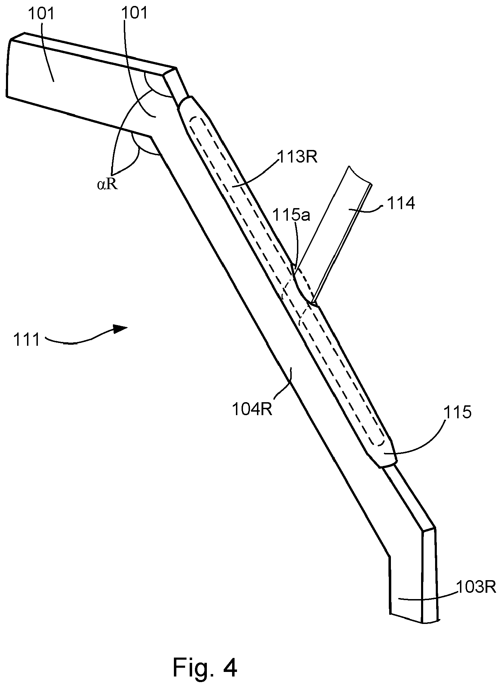

The elongated stiff element 113 is adapted to be arranged (e.g. attached, connected) to the barrier net 100. The elongated stiff element 113 is configured to provide rigidity to the barrier net 100, at least when the barrier net 100 is mounted in a vehicle 10. The left elongated stiff element 113L is attached to the left corner net member 104L of the barrier net 100. The right elongated stiff element 113R is attached to the right corner net member 104R of the barrier net 100. Preferably, the corner net members 104L, 104R are provided with a housing 115. The housing 115 is configured to receive the elongated stiff element 113 as is illustrated in Fig. 3 and in the detailed view of Fig. 4. The elongated stiff element 113 extends along substantially the entire length of the corner net member 104. The elongated stiff element 113 extends along the longitudinal axis, i.e. a longitudinal extension, of the corner net member 104. The housing 115 of the corner net member 104 is preferably shaped to fit tightly (snuggly, with limited/reduced/no play) around (about) the stiff element 113. Thus, the housing 115 is an elongated element, shaped to receive and hold the elongated stiff element 113. The housing 115 of the left corner net member 104L extends at the angle αL from upper net member 101. The left elongated stiff element 113L arranged in the housing 115 of the left corner net member 104L, extends at the angle αL from upper net member 101. The housing 115 of the right corner net member 104R extends at the angle αR from upper net member 101. The right elongated stiff element 113R is arranged in the housing 115 of the right corner net member 104R and extends at the angle αR from upper net member 101. According to a preferred embodiment, the stiff elongated element 113 is a rod, made of stainless steel, titanium, aluminum or glass fiber.

An advantage of the elongated stiff element 113 is that it provides rigidity to the barrier net 100, especially at the top corners of the barrier net 100, which tend to collapse. While, the barrier net 100 in its entirety conforms to the vehicle's inner structure, the elongated stiff element 113 may provide a delimited area between the vehicle's inner roof and the elongated stiff element for passing ceiling-mounted belts or the like through the delimited area. The delimited area formed between the elongated stiff element and the vehicle's inner configuration is substantially triangular, where the elongated stiff element 113 forms the hypotenuse of the triangle and the vehicle's inner configuration, comprising a top corner of the vehicle's inner ceiling, forms the opposite and adjacent sides of the triangle.

The elongated stiff element 113 may enables the upper net member 101 to be arranged at a vertically higher (i.e. along the vertical axis V), than the upper fastening parts 20L, 20R of the vehicle 10, reducing a risk that a gap is formed between the upper net member 101 and an interior of the ceiling of the vehicle 10. The elongated stiff element 113 may further enable the side member 103L, 103R connected to the elongated stiff element 113 to be horizontally (along the horizontal axis H) further form the other side net member 103L, 103R than the upper fastening parts 20L, 20R of the vehicle 10, reducing a risk that a gap is formed between the side net member 101 and an interior of a side of the vehicle 10. In short, the elongated stiff element 113 reduces a risk that gaps are formed between the barrier net 100 and an interior of the vehicle 10.

According to another embodiment, the elongated stiff element 113 may be shaped to conform with the inner ceiling of the vehicle 10. The stiff elongated element 113 may be bent to conform with the inner ceiling of the vehicle 10 and to avoid contact with for instance a sunroof panel, a moonroof panel, a top side window of the vehicle 10 or any other obstacle.

Fig 4 illustrates a detailed view of the elongated stiff element 113 according to a preferred embodiment of the present disclosure. The elongated stiff element 113 is arranged in the housing 115 of the right corner net member 104R. In Fig. 4, a part of the upper net member 101 and a part of the right side net member 103R are shown. The right corner net member 104R is arranged between upper net member 101 and the right side net member 103R. The angle αR arranged between the upper net member 101 and the right corner net member 104R as well as the right elongated stiff element 113R arranged in the housing 115 is also shown. Fig. 4 further shows that the elongated stiff element 113R extends along the longitudinal axis of the corner net member 104R. The housing 115 is an elongated housing to hold the right stiff element 113R. The stiff element 113R provides rigidity to the right corner net member 104R.

The cord member 114 is configured to be attached to elongated stiff element 113L, 133R. In Fig. 4, the housing 115 is shown with an opening 115a through which the cord member 114R, 114L is fastened (attached, connected) to the elongated stiff element 133R. In this embodiment, the cord member 114R, 114L extends around (about) the elongated stiff element 113R such that the cord member 114R, 114L doubles back along towards the associated fastening element 112 (not shown in Fig. 4). The cord member 114R, 114L may, for instance, be attached around (about) the elongated stiff element 113 by one or more seams (preferably an envelope seam), one or more rivets, one or more bolts or combinations thereof. The opening 115a is preferably configured (sized) to fit around the cord member 114R, 114L without bending or preventing the motion of the cord member 114R, 114L. Thus, in a preferred embodiment, where the cord member 114R, 114L is provided as a flat strip webbing, the opening 115a is configured with a width and a depth greater than the width and the depth of the cord member 114R, 114L. The cord member 114R, 114L is attached to the elongated stiff element 113R as is illustrated in Fig. 4.

In one preferred embodiment, the corner net member 104 is formed from a webbing material, i.e. a belt material and the housing 115 is formed from the net member 104. Preferably, the belt material has a width that is double the width of the corner net member 104, such that the corner net member 104 may be formed by folding the belt material along its longitudinal extension thereby providing the housing 115 between the folded portion of the belt material. The opening 115a of the housing 115 may be provide by partly sewing the open ends of the belt material together, or by cutting portion of the fold along the longitudinal extension of the belt material.

The features described with reference to the right stiff element 113R in Fig. 4 are also valid for the left stiff element 113L. The right stiff element 113R is described to provide a detailed example but it should be readily understood that the description applies to the left stiff element 113L as well. Therefore, both the right stiff element 113R and the left stiff element 113L have been marked out in the description of Fig. 4 above.

According to another example that is not illustrated, the elongated stiff element 113L, 113R is attached to the corner net member 104L, 104R of the barrier net 100 with securing means arranged on corner net member 104L, 104R. Such securing means may be strings for securing the elongated stiff element 113L, 113R to the corner net member 104L, 104R. In some examples, the securing means may be provided as e.g. eyelets. It is equally possible to secure the elongated stiff element 113L, 113R to the corner net member 104L, 104R by heat treatment, such as e.g. by heat-welding. When the elongated stiff element 113 is secured to the corner net member 104, the elongated stiff elements 113L, 113R extend at the angle αL, αR from upper net member 101.

With reference to Fig 3 again, the left and right upper fastening elements 112L, 112R and the left and right cord members 114L, 114R of the left and right upper fastening arrangement 111L, 111R will be described. The left cord member 114L extends between the left elongated stiff element 113L and the left upper fastening element 112L. The left upper fastening element 112L fastens the barrier net 100 to the respective upper fastening part 20 of the vehicle 10. The right cord member 114R extends between the right elongated stiff element 113R and the right upper fastening element 112R. The right upper fastening element 112R fastens the barrier net 100 to the respective upper fastening part 20 of the vehicle 10.

According to a preferred embodiment, the cord member 114L, 114R is provided as a webbing, even more preferably a flat strip webbing. According to another embodiment, the cord member 114L, 114R is preferably provided by a tube webbing. The cord member 114L, 114R may also be provided by a meshing material, being e.g. the same material as for the mesh 105, thus the cord member 114L, 114R may be provided as an extension of the mesh 105. The cord member 114L, 114R is advantageously made from substantially non-flexible strong fibers. The cord member 114L, 114R, which will be used in automobile safety installations, is advantageously both comparably light, strong and able to withstand a breaking load of at least 10-15 kN. The breaking load being defined as the maximum force under straight pull a free length of rope can be exposed to until it breaks.

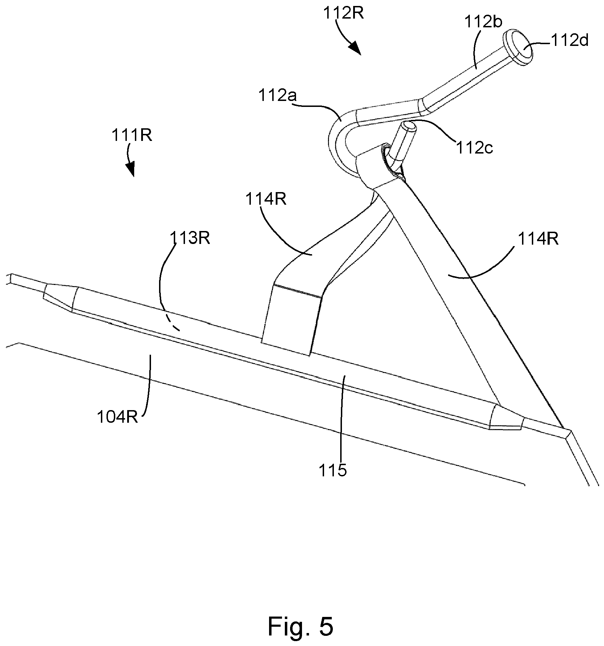

Fig. 5 provides a detailed view of the right upper fastening element 112R and part of the right cord member 114R. As previously mentioned, the upper fastening element 112R, 112L is used to attach the barrier net 100 to a corresponding upper fastening part 20 of the vehicle 10. According to one example, the upper fastening element 112R has a hook element 112a and an elongated portion 112b. The hook element 112a is configured to be attached to the cord member 114R. According to one example, the hook element 112a has an opening 112c so that the cord member 114L, 114R can be passed through the opening 112c and arranged in the hook element 112a. According to another example, the hook element 112a may be entirely closed so as to form a loop, thus the cord member 114R must be threaded through the loop to attach the cord member 114R to the hook element 112a. This increases a strength of the upper fastening element 112 and a risk of the hook element 12a being deformed causing the cord member 114 to disengage the upper fastening element 112 is significantly reduced.

The elongated portion 112b is attached to the hook element 112a at a first end and the elongated portion 112b is adapted to be fastened to the upper fastening part 20 of the vehicle 10 at a second end. The second end of the elongated portion 112b may have fasteners for fastening the upper fastening element 112R, 112L to the upper fastening part 20 of the vehicle 10. The fasteners may be a flat head 112d for attaching the upper fastening element 112R, 112L to the upper fastening part 20 of the vehicle 10. The flat head 112d, which is illustrated in Fig. 5, may be arranged at the second end of the elongated portion 112b. As is known in the art, the flat head 112d is configured to be fastened to the corresponding upper fastening part 20 of the vehicle 10. According to another example, the upper fastening element 112R, 112L may be externally or internally threaded to be fastened to a corresponding internally or externally threaded upper fastening part 20 of the vehicle 10. The threads may be arranged externally on the outer surface of the elongated portion 112b of the upper fastening element 112R, 112L or the elongated portion 112b may comprise an opening at the second end of the elongated portion 112b which may be threaded internally.

The preferred example is illustrated in Fig. 5, where the elongated portion 112b is shown to have the above described flat head 112d, also called mushroom head. The hereby described fasteners of the upper fastening element 112R, 112L for securing the upper fastening arrangement 111R, 111L to the upper fastening part 20 of the vehicle 10 are not limiting, there are several fasteners that may be used to fasten the upper fastening element 112R, 112L to the upper fastening part 20 of the vehicle 10 which are known by the person skilled in the art. The upper fastening element 112R, L is preferably made of metal, more preferably steel.

The features described with reference to the right upper fastening element 112R in Fig. 4 are also valid for the left upper fastening element 112LR. The right upper fastening element 112R is described to provide a detailed example but it should be readily understood that the description applies to the left upper fastening element 112R as well. Therefore, both the right upper fastening element 112R and the left upper fastening element 112L have been marked out in the description of Fig. 5 above.

With reference to Fig. 3, it is shown that the left cord member 114L extends from the elongated stiff element 113L, through the upper fastening element 112L and along the left side net member 103L. The left side net 103 has a first guiding element 121 for guiding the left cord member 114L along the left side net member 103L. The first guiding element 121 may for instance be provided as an elastic webbing belt, also called an elastic loop, to be arranged around the left side net member 103L and the left cord member 114L extending along the left side net member 103L. Fig. 3 also shows a corresponding first guiding element 121 for the right cord member 114R extending from the elongated stiff element 113R, through the upper fastening element 112R and along the right side net member 103R. The guiding elements 121 keeps the right cord member 114R arranged along the right side net member 103R. Thereby providing a user-friendly and safe arrangement.

Fig. 3 further shows that tensioning means 120 may be provided for tensioning the left cord member 114L. The tensioning means 120 may for instance be a webbing adjuster or a strap, such as a rubber strap, provided on the left side net member 103L. Corresponding tensioning means 120 are provided for tensioning the right cord member 114R. The tensioning means 120 may for instance be a webbing adjuster or a strap, such as a rubber strap, provided on the right side net member 103R.

As can be seen in Fig. 3, the barrier net 100 may further have a left lower fastening arrangement 140L and a right lower fastening arrangement 140R for fastening the barrier net 100 at a lower region of the vehicle 10.

The left lower fastening arrangement 140L has a left lower cord member 141L and a left lower fastening element 142L. The left lower cord member 141L is attached to a lower left region of the barrier net 100. The left lower cord member 141L is attached to the left side net member 103L or to the lower net member 102, for instance near the left end 102L of the lower net member 102. According to an example, a first end of the left lower cord member 141L is fixedly attached to the tensioning means 120 while the left cord member 114L of the left upper fastening arrangement 111L is looped through the webbing adjuster 120 so that the left cord member 114L may be adjusted.

The left lower fastening element 142L may be slidably arranged on the left lower cord member 141L. The left lower fastening element 142L may be provided with a hook for attaching of the lower fastening arrangement 140L to corresponding lower fastening part of vehicle 10 (not shown). By providing a slidable left lower fastening element 142L on the lower cord member 141L, the length of the lower cord member 141L extending between the barrier net 100 and the lower fastening part of vehicle 10 may be adjusted. Thus, providing means for tensioning the left lower fastening element 142L.

The right lower fastening arrangement 140R has a right lower cord member 141R and a right lower fastening element 142R. The right lower cord member 141R is attached to a lower right region of the barrier net 100. The right lower cord member 141R is attached to the right side net member 103R or to the lower net member 102, for instance near the right end 102R of the lower net member 102. According to an example, a first end of the right lower cord member 141R may be fixedly attached to the tensioning means 120 while the right cord member 114R of the right upper fastening arrangement 111R may be looped through the webbing adjuster 120 so that the right cord member 114R may be adjusted.

The right lower fastening element 142R may be slidably arranged on the right lower cord member 141R. The right lower fastening element 142R is provided with a hook for attaching of the lower fastening arrangement 140R to corresponding lower fastening part of vehicle 10 (not shown). By providing a slidable right lower fastening element 142R on the lower cord member 141R, the length of the lower cord member 141R extending between the barrier net 100 and the lower fastening part of vehicle 10 may be adjusted. Thus, providing means for tensioning the right lower fastening element 142R.

The technical features of the barrier net 100 have been described in detail with reference to Fig. 3-5. The barrier net 100 with associated technical features will now be described when mounted to vehicle 10 with reference to Fig. 2a-c.

Fig. 2a illustrates the barrier net 100 with the left upper fastening arrangement 111L and the right upper fastening arrangement 111R mounted to the vehicle 10. Each upper fastening arrangement 111L, 111R have the above described upper fastening element 112L, 112R, the cord member 114L, 114R and the elongated stiff element 113L, 113R.

The upper net member 101 of the barrier net 100 is configured to conform to the inner ceiling 10a of the vehicle 10 when the barrier net 100 is mounted to the vehicle 10 as is illustrated in Fig.2a. Thus, no, or only a reduced gap 14 is formed between the inner ceiling 10a of the vehicle 10 and the present barrier net 100 as was described for the prior art barrier net 11. The upper net member 101 of the barrier net 100 follows the inner ceiling 10a of the vehicle 10. The flexible material of upper net member 101 easily conforms to the inner ceiling 10a of vehicle 10. Preferably, the upper net member 101 is arrange between two upper fastening means 110 as can be seen in Fig. 2a.

The upper net member 101 is provided between the left corner net member 104L and the right corner net member 104R. In contrast to upper net member 101, corner net members 104L, 104R are stiff due to the elongated stiff elements 113L, 113R attached thereto. Thus, the elongated stiff element 113L, 113R provide stiffness and a solid framework to the barrier net 100.

The barrier net 100 further has the lower net member 102. The lower net member 102 is substantially parallel to the horizontal axis H of the vehicle 10, which is the same for barrier net 100 when the barrier net 100 is mounted to vehicle 10. The lower net member 102 is further substantially perpendicular to the longitudinal axis L of the vehicle 10. The left side net member 103L and the right side net member 103R are substantially parallel to each other and to vertical axis V of the vehicle 10, which is the same for barrier net 100 when the barrier net 100 is mounted to vehicle 10. The left side net member 103L and the right side net member 103R are further substantially perpendicular to the longitudinal axis L of the vehicle 10. The left side net member 103L extends between lower net member 102 and the left corner net member 104L. The right side net member 103R extends between the lower net member 102 and the right corner net member 104R.

As previously described with reference to Fig. 3, the cord member 114L of the left upper fastening arrangement 111L is adapted to extend from the elongated stiff element 113L, through the upper fastening element 112L and along the left side net member 103L. The cord member 114R of the left upper fastening arrangement 111R is adapted to extend from the elongated stiff element 113R, through the upper fastening element 112R and along the left side net member 103R.

With regards to the left upper fastening arrangement 111L, a first part 116L of the cord member 114L extends from the elongated stiff element 113L through the upper fastening element 112L in a first direction D1. As can be seen in Fig. 1, a second part 117L of the cord member 114 further extends from the upper fastening element 112L towards and along the left side net member 103L in a second direction D2. When a pulling force F1 is applied in the second direction D2 to the second part 117, a corresponding pulling force F2 is applied in the first direction D1 to the first part 116L. Thereby, the elongated stiff element 113L is pulled towards the upper fastening element 112L.

With regards to the right upper fastening arrangement 111R, a first part 116R of the cord member 114R extends from the elongated stiff element 113R through the upper fastening element 112R in a third direction D1'. As can be seen in Fig. 1, a second part 117R of the cord member 114 further extends from the upper fastening element 112R towards and along the right side net member 103R in a fourth direction D2'. When a pulling force F1 is applied in the fourth direction D2' to the second part 117R, a corresponding pulling force F2 is applied in the third direction D 1' to the first part 116R. Thereby, the elongated stiff element 113R is pulled towards the upper fastening element 112R.

By pulling the left elongated stiff element 113L and the right elongated stiff element 113R towards their respective upper fastening element 112L, 112R, the distance between each elongated stiff element 113L, 113R and its respective upper fastening element 112L, 112R decreases and the upper net member 101, arranged between the left and right elongated stiff elements 113L, 113R will be pulled towards the inner ceiling 10a of the vehicle 10. The left and right elongated stiff element 113L, 133R apply pressure on the upper fastening element 101, thereby forcing the flexible upper fastening element 101 to bend towards the inner ceiling 10a of the vehicle 10. Since the upper fastening element 101 is made flexible material, the upper fastening element 101 will conform to the inner ceiling 10a of the vehicle 10. Thus, a steady barrier net 100 that follows the inner ceiling 10a of the vehicle 10 is provided. No gap is formed between the inner ceiling 10a of the vehicle 10 and the barrier net 100. The present embodiment makes it possible to provide the upper fastening element 101 as high up and close to the ceiling as possible given the specific vehicle design.

The upper fastening arrangement 111 of the present disclosure will increase the tension of the upper net member 101 compared to the prior art. The upper net member 101 will be taut which decreases a forward deflection of the barrier net 100 when subjected to forces in the longitudinal direction L of the vehicle. That is to say, there is less play in the mounting of the barrier net 100 which reduces its extension towards the passenger side when cargo is stopped by the barrier net.

The lower net member 102 was previously described as being substantially parallel to the horizontal axis H of the vehicle 10 and substantially perpendicular to the longitudinal axis L of the vehicle 10 when the barrier net 100 is mounted to vehicle 10. The upper net member 101 may deviate from the horizontal axis H when the barrier net 100 is mounted to vehicle 10. If the left and right upper fastening arrangement 111L, 111R apply sufficient tension on the upper net member 101, the upper net member 101 will adapt to the shape of the inner ceiling 10a of vehicle 10.

With reference to Fig. 2a, the left and right cord members 114L, 114R are shown to extend from the elongated stiff element 113L, 113R through the upper fastening element 112L, 112R and along the left side net member 103L and the right side net member 103R. The left side net 103 has the first guiding element 121 for guiding the second part 117 of the left cord member 114L along the left side net member 103L. The right side net 103R has the first guiding element 121 for guiding the second part 117R of the right cord member 114R along the right side net member 103R.

Fig. 2a further shows the tensioning means 120 for tensioning the left cord member 114L and the right cord member 114R. The tensioning means 120 may be provided on the left and right side net members 103L, 103R.

Fig. 2a further shows a left and right lower fastening arrangements 140L', 140R' according to one embodiment. The left and right lower fastening arrangements 104L', 140R' for fastening the barrier net 100 at a lower region of the vehicle 10 are, in this embodiment, provided with a lower cord member 141' and lower fastening element 142'.

According to one example, the left lower cord members 141L' extends between a lower part of the barrier net 100 and the tensioning means 120. The lower part of the barrier net 100 may be the left side net member 103L or the lower net member 102. Preferably, a lower part of the left side net member 103L or a part of the lower net member 102 arranged near left end 102L of the left side net member 103L. The left lower fastening element 142L' may be slidably arranged on the left lower cord member 141L' between the lower part of the barrier net 100 and the tensioning means 120. The left lower fastening element 142L' is provided with a hook for attaching of the lower fastening arrangement 140L' to corresponding lower fastening part of vehicle 10 (not shown). By providing a slidable left lower fastening element 142L' on the lower cord member 141L', the position of the left lower fastening element 142L' on the lower cord member 141'may be adjusted .

According to one example, the right lower cord members 141R' extends between a lower part of the barrier net 100 and the tensioning means 120. The lower part of the barrier net 100 may be the right side net member 103R or the lower net member 102. Preferably, a lower part of the right side net member 103R or a part of the lower net member 102 is arranged near the right end 102R of the right side net member 103R. The right lower fastening element 142R' may be slidably arranged on the right lower cord member 141R' between the lower part of the barrier net 100 and the tensioning means 120. The right lower fastening element 142R' is provided with a hook for attaching of the lower fastening arrangement 140R' to corresponding lower fastening part of vehicle 10 (not shown). By providing a slidable right lower fastening element 142R' on the lower cord member 141R', the position of the right lower fastening element 142R' on the lower cord member 141' may be adjusted.

The lower cord member 141L', 141R' may be looped through the tensioning means 120 or fixedly attached to the tensioning means 120. The tensioning means 120 may be a webbing adjuster. In the case, the lower cord member 141L', 141R' is looped through the tensioning means 120, the cord member 114L, 114R of the upper fastening arrangements 111L, 111R are fixedly attached to the tensioning means 120. The cord member 114L, 114R is then indirectly adjusted by adjusting the length of the lower cord member 141L', 141R' extending between the lower part of the barrier net 100, such as the net member 103L, and the tensioning means 120. When shortening the lower cord member 141L', 141'R extending between the net member 103L, 103R and the tensioning means 120, a pulling force F1 is applied in the second direction D2 to the second part 117 of the cord member 114L, 114R resulting in a pulling force F2 being applied in the first direction D 1 to the first part 116L, 116R of the of the cord member 114L, 114R. Thereby, the elongated stiff element 113L, 113R is pulled towards the upper fastening element 112L, 112R. Resulting in the upper net member 101 being pushed (urged, forced) towards the inner ceiling 10a of the vehicle 10.

According to another example, the lower cord member 141L', 141R' is fixedly attached to the tensioning means 120 while cord member 114L, 114R of the upper fastening arrangements 111L, 111R is looped through the tensioning means 120. The cord member 114L, 114R may be directly adjusted by adjusting the length of the second part 117 of the cord member 114L, 114R extending between upper fastening element 112 and the tensioning means 120. When shortening the second part 117 of the cord member 114L, 114R, a pulling force F1 is applied in the second direction D2 to the second part 117 resulting in a pulling force F2 being applied in the first direction D1 to the first part 115L, 115R of the cord member 114L, 114R. Thereby, the elongated stiff element 113L is pulled towards the upper fastening element 112L, 112R. Consequently, the upper net member 101 being pushed towards the inner ceiling 10a of the vehicle 10.

As is shown in Fig. 2a, a second guiding element 122 may be provided to the left side net 103L and the right side net 103R. The second guiding element 121 may for instance be provided as an elastic webbing belt, also called an elastic loop. The second guiding element 121 may be arranged around the left side net member 103L and left lower cord member 141L' extending between the left lower fastening element 142L' and the tensioning means 120. Thus, the second guiding element 122 guides the left lower cord member 141L' along the left side net member 103L. Correspondingly, the second guiding element 121 may be arranged around the right side net member 103R and right lower cord member 141R extending between the right lower fastening element 142R' and the tensioning means 120. Thus, the second guiding element 122 guides the right lower cord member 141R' along the right side net member 103R.

The embodiment of the barrier net of Fig. 2b differs from the embodiment of the barrier net 100 of Fig. 2a in that a different mesh pattern 105 is provided, as previously stated.

Fig. 2b has been included to show that the part of the elongated stiff element 113L, 131R to which the cord member 114L, 114R is attached to, a part closer to the upper net member 101 or a part closer to the side net member 103L, 103R, will affect the behavior of the flexible upper net member 101. In Fig. 2a, the cord member 114L, 114R is shown to be attached to the elongated stiff element 113L, 113R at an upper part of the elongated stiff element 113L, 113R, a part of the elongated stiff element 113L, 113R arranged close to the upper net member 101. Thereby, when applying a force F2 to the first part 115L, 115R of the cord member 114L, 114R to bring the elongated stiff element 113L, 113R towards the upper fastening element 112L, 112R, the more tension will be applied to the flexible upper net member 101 then in the example provided by Fig. 2b. In Fig. 2b, the cord member 114L, 114R is shown to be attached to the elongated stiff element 113L, 113R at a lower part of the elongated stiff element 113L, 113R, a part of the elongated stiff element 113L, 113R arranged close to the side net member 103L, 103R. Thereby, when applying a force F2 to the first part 115L, 115R of the cord member 114L, 114R to bring the elongated stiff element 113L, 113R towards the upper fastening element 112L, 112R, less tension will be applied to the flexible upper net member 101 then in the example provided by Fig. 2a.

Depending on the overall shape of the vehicle 10 and/or the inner ceiling 10a of the vehicle, it is desirable to provide additional ways to adjust the barrier net 100 other than the means provided by tensioning the cord members 114L, 114R. Therefore, the housing 115 to receive the elongated stiff element 113L, 113R as is illustrated in Fig. 4, may have several openings 115a arranged along longitudinal axis of the elongated housing so that the cord member 114R, 114L can be fastened to different parts extending along the elongated stiff element 113L, 113R (not illustrated).

In some embodiments, the opening 115a is an elongated opening such that the positon where the cord member 114 engages the elongated stiff element 113 may be adjusted by sliding the cord member 114 along the opening 115a. Movable clamps (not shown) may be provided on the elongated stiff element 113 at each side of the cord member 114 to fixate the positon where the cord member 114 engages the elongated stiff element 113.

With reference to Fig. 2c, a barrier net 100' with one upper fastening arrangement 111R according to the present invention is provided. The barrier net 100' has one left upper fastening means 11L, being prior art fastening means 11, and the right upper fastening arrangement 111R. The right upper fastening arrangement 111R has an above described upper fastening element 112R, cord member 114R and elongated stiff element 113R. The embodiment of Fig. 2c only differs from the embodiment of Fig. 2a in that only one upper fastening arrangement 111 according to the disclosure is provided, the other upper fastening arrangement is a fastening arrangement according to the prior art. Otherwise, the previously described technical features for the first embodiment described with reference to Figs. 2a, 2b, 3 apply to the second embodiment of Fig. 2c as well.

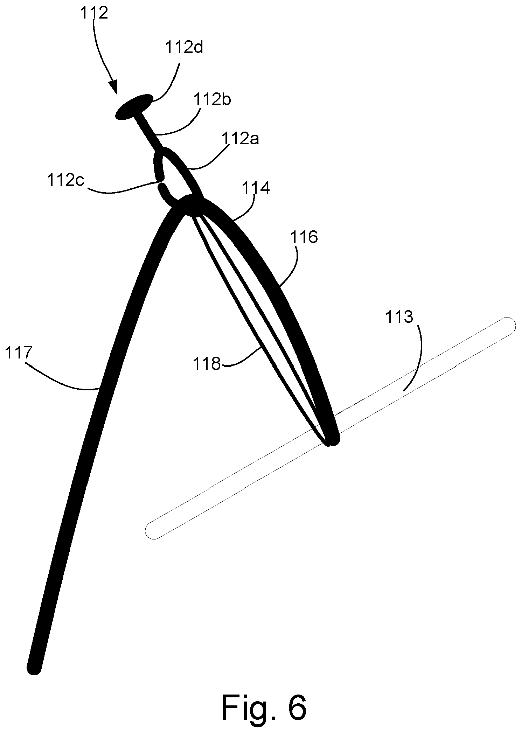

With reference to Fig. 6, in order to increase the simplicity of mounting the barrier net 100, according to some embodiments, the barrier net 100 may be provided with a resilient element 118. The resilient element 118 may be, as shown in Fig. 6, looped about the upper fastening element 112 and the elongated stiff element 113. In other embodiments (not shown), the resilient element is looped only about either the upper fastening element 112 or the elongated stiff element 113 and then attached to the cord member 114. The cord member 114 is looped about the elongated stiff element 113 and extends through the upper fastening element 112 as previously described. The cord member 114 is a load bearing portion. The resilient element 118 is shorter than the first cord part 116 of the cord member 114, thereby limiting the resilience of the resilient element 118.

The cord member 114 is arranged to prevent the resilient element 118 from stretching too far and eventually break, in that the load bearing cord member 114 will limit the resilience of the resilient element 118. In other words, a maximum extension of the resilient element 118 is defined by the first part 116 of the cord member 114.

The upper fastening element 112 and the elongated stiff element 113 will, in this embodiment, engage both the resilient element 118 and the cord member 114. The cord member 114 may be formed of any suitable material e.g. belt material, metal chain, wire etc. The load bearing cord member 114 may be flexible or rigid.

When a barrier net 100 comprising the resilient element 118 is mounted in a vehicle 10, the resilient element 118 may be stretched to allow a tight fit without having to loosen e.g. tensioning means 120. If subjected to a force (e.g. cargo hitting the net member 102 during a collision), the resilient element 118 will be stretched until a point where the cord member 114 will prevent it from extending further. At this point, the cord member 114, being the load bearing portion, will carry the force from the cargo.

It should be mentioned that dimensions and geometrical relations are, if nothing else is stated or obvious from the context, related to the coordinate system of the vehicle 10. When the barrier net is mounted in the vehicle 10, the coordinate system of the barrier net 100 is the same as coordinate system of the vehicle 10. In other words, references are generally made to the barrier net 100 when it is mounted in a vehicle 10 if nothing else is stated.

Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. For example, while embodiments of the invention have been described with reference to barrier nets of vehicles, persons skilled in the art will appreciate that the embodiments of the invention can equivalently be applied to other forms of netting where forward deflection needs to be considered. Furthermore, although specific terms may be employed herein, they are used in a generic and descriptive sense only and not for purposes of limitation. Therefore, a person skilled in the art would recognize numerous variations to the described embodiments that would still fall within the scope of the appended claims. Furthermore, although individual features may be included in different claims (or embodiments), these may possibly advantageously be combined, and the inclusion of different claims (or embodiments) does not imply that a combination of features is not feasible and/or advantageous. In addition, singular references do not exclude a plurality. Finally, reference signs in the claims are provided merely as a clarifying example and should not be construed as limiting the scope of the claims in any way.

## Claims

1. A foldable barrier net (100) for separating a cargo area of a vehicle (10) from a passenger compartment of the vehicle (10), the barrier net (100) comprises at least two upper fastening means connected by an upper net member (101) of the barrier net (100) and being configured to attach the barrier net (100) to a respective upper fastening part (20) of the vehicle (10), at least one of the at least two upper fastening means is an upper fastening arrangement (111) connecting the upper net member (101) and a side net member (103L, 103R) of the barrier net (100), wherein the upper fastening arrangement (111) comprises:
- an upper fastening element (112) for fastening the barrier net (100) to the respective upper fastening part (20) of the vehicle (10),
- an elongated stiff element (113) arranged to extend between the upper net member (101) and the side net member (103L, 103R), and
- a cord member (114) extending from the elongated stiff element (113) through the upper fastening element (112) in a first direction (D1), and from the upper fastening element (112) towards the side net member (103L, 103R) or the upper net member (101) in a second direction (D2).

2. The barrier net (100) of claim 1, wherein the elongated stiff element (113) is attached to and extend along a corner net member (104L, 104R) of the foldable barrier net (100), wherein the corner net member (104L, 104R) is arranged to connect proximal ends of between the upper net member (101) and the side net member (103L, 103R) at an angle (α).

3. The barrier net (100) of claim 2, wherein the angle (α) is between 25 and 65 degrees, preferably the angle (α) is between 35 and 55 degrees and most preferably the angle (α) is about 45 degrees.

4. The barrier net (100) of any one of the preceding claims, wherein the cord member (114) comprises one or more tensioning means (120) for, when the barrier net is mounted in the vehicle (10), tensioning the cord member (114); thereby pulling the elongated stiff element (113) towards the upper fastening element (112).

5. The barrier net (100) of any one of the preceding claims, wherein the barrier net (100) comprises at least one lower fastening arrangement (140) for fastening the barrier net (100) at a lower region of the vehicle (10), preferably the barrier net (100) comprises two lower fastening arrangements (140).

6. The barrier net (100) of claim 5, wherein the cord member (114) extends from the elongated stiff element (113) to the lower fastening arrangement (140).

7. The barrier net (100) of any one of the preceding claims, wherein the cord member (114) is attached to the elongated stiff element (113) at a middle of the elongated stiff element (113) or at a part of the elongated stiff element (113) between the middle of the elongated stiff element (113) and the upper net member (101).

8. The barrier net (100) of any one of the preceding claims, wherein the second direction (D2) of the cord member (114) extends along the side net member (103L, 103R).

9. The barrier net (100) of any one of the preceding claims, wherein the cord member (114), in the second direction (D2), is guided along the side net member (103L, 103R) or the upper net member (101) by at least one guiding element (121).

10. The barrier net (100) of any one of the preceding claims, wherein a resilient element (118), is attached to, and extends between the elongated stiff element (113) and the upper fastening element (112).

11. The barrier net (100) of claim 10, wherein a portion of the cord member (114) extending from the elongated stiff element (113) to the upper fastening element (112) is longer than the resilient element (118); thereby limiting the resilience of the resilient element (118).

12. The barrier net (100) of any one of the preceding claims, wherein the upper net member (101) of the barrier net (100) is made of a flexible material, preferably polyethylene (PE) or polypropylene (PP).

13. The barrier net (100) of any one of the preceding claims, wherein the barrier net (100) comprises two upper fastening arrangements (111).
